# EUROPEAN PATENT SPECIFICATION

(11) **EP 3 638 586 B1**
(45) Date of publication and mention of the grant of the patent: **10.01.2024**
(21) Application number: 18818667.0
(22) Date of filing: 13.06.2018
(51) Int. Cl.: B64C 39/02, B64F 3/02, B64U 10/13, B64U 80/86, B64U 101/45

(54) **TETHERED DRONE SYSTEM**
ANGEBUNDENES DROHNENSYSTEM
SYSTÈME DE DRONE CAPTIF

(30) Priority: 13.06.2017 US 201762518788 P
(43) Date of publication of application: 22.04.2020
(73) Proprietor: The Intellectual Property Network, Inc., Tucson, Arizona 85713 (US)
(72) Inventor: BRADLEY, Aiden Nathaniel, Tucson, Arizona 85730 (US); BRADLEY, Nathaniel T., Tucson, Arizona 85730 (US); PAUGH, Joshua S., Tucson, Arizona 85730 (US)
(74) Representative: Tomkinson, Alexandra
(86) International application number: PCT/US2018/037370
(87) International publication number: WO 2018/232010

(56) References cited:
- CN-A- 105 217 044
- CN-U- 204 680 466
- CN-U- 205 140 534
- US-A1- 2013 134 254
- US-A1- 2013 134 254
- US-A1- 2016 144 958
- US-A1- 2017 043 869
- US-A1- 2017 043 872
- US-A1- 2017 043 872
- US-A1- 2017 078 552

## Description

### PRIORITY STATEMENT

This application claims priority to U.S. Provisional Patent Application No. 62/518,788 filed on June 13, 2017 entitled Tethered Drone System.

### BACKGROUND

### I. Field of the Disclosure

The invention relates to tethered drones. More specifically, but not exclusively, the invention relates to a system, method, and tethered drones for various forms of unmanned operation. II. Description of the Art In recent years drone availability and technology has developed significantly. Despite the improvements most drone systems are still limited by battery, control signal, and reliability issues. Many of the industries that could most benefit from drone technology have not been able to take advantage of the advances.

US2013/0134254 discloses a UAV fire-fighting system designed to extinguish fires from the air while remaining tethered to the ground via a tether system. The tether system provides the UAV with power and extinguishant.

CN205140534 discloses a graphite alkene coating film aviation wire.

CN204680466 discloses a special power cable of magnetism aerotrain for intelligent transportation.

US2017/0043872 discloses a tethered unmanned aerial vehicle fire fighting system. One drone is provided to lift a hose line and another drone is connected to the hose line to receive water along the same to act as the firefighter. A tether line couples the firefighting drone to a control station through the lifting drone. The tether line can include a power line. US2016144958A1 discloses a tethered unmanned aerial vehicle. The tethered UAV may be tethered to a ground station for constricting the flight space of the UAV while also providing the option for power delivery and/or bidirectional communications. The tethered UAV's flight path may be extended by introducing one or more secondary UAVs that cooperate to extend the horizontal flight path of a primary UAV. The ground station, which may be coupled with the tethered aerial vehicle, may comprise a listening switch configured to determine a condition of the tether such that the supply of power to the tether may be terminated when tether damage or a tether severance is detected.

CN105217044A discloses a parallel motor speed regulation method and product for a multi-axis aircraft DC motor.

### SUMMARY OF THE DISCLOSURE

According to the present invention there is provided a tethered drone system according to claim 1.

According to the present invention there is provided a method of utilizing a tethered drone system according to claim 15.

Preferred embodiments are provided in the dependent claims.

### BRIEF DESCRIPTION OF THE DRAWINGS

The subject matter of the present disclosure is described in detail below with reference to the attached drawing figures, and where
FIG. 1 is a pictorial representation of a tethered drone system;
FIG. 2 is a block diagram of a tethered drone system;
FIG. 3 is a flowchart of a process for controlling a tethered drone system;
FIG. 4 is a flowchart of a process for utilizing a tethered drone system;
FIG. 5 is a pictorial representation of a tethered drone system operated from a platform;
FIG. 6 is a flowchart of a process for operating a tethered drone system from a platform.

### DETAILED DESCRIPTION OF THE DISCLOSURE

The disclosure provides a system, method, platform, and tethered drones. Innovations to unmanned aerial vehicles, such as tethered drones, allows humans to command drone, droid, aerospace, and chemical analysis systems, which can be applied to a variety of terrestrial or space-based industrial services, scientific exploration, expeditions, remote monitoring (e.g., traffic, crops, mining, etc.).

This disclosure allows for the utilization of autonomous vehicles that further utilize innovations including optical masking and space exploration drones which utilize command center software to create an networked infrastructure. Through a focus on safety, science and value creation this disclosure advances humankind into an era of unprecedented exploration, discovery and prosperity.

The disclosure further discloses tethering of drones and unmanned aerial vehicles (UAV) systems composed of drones and other unmanned vehicles that utilize tethering cables to maintain flight in the sky perpetually via power supplied from a ground based, aerial, or other mobile supply source and are suitable for various industry applications, such as television broadcasting, signal relay, video surveillance, crop monitoring, and so forth. When mounted to various mobile control systems, tethered drones are reduced in size to perform non-passive and industrialized tasks. Some industrialized applications include cleaning surfaces, such as windows and sky scrapers, delivering organic fertilizers and pesticides, and many other real world industrial applications. Additionally, the tethered drones may be utilized in aeronautical, astronautical, terrestrial, extraterrestrial, land based, aquatic, oceanic and other applications. The disclosure has taken drones from observational based utilizations to task-based utilizations, which allow the drones to perform a broader series of tasks in robotics, research, and many other areas of scientific, astronautical and industrial applications.

Some benefits include: 1) uninterrupted mission through tethering of ground-based resources; 2) Broadband signal transmission via optical fiber and in-depth control panel analysis; 3) drone ascending, descending, and hovering controlled by the ground control station which can be mobile; 4) drone carrying and delivering various mission payloads and apparatus for robotic systems and code transmission delivery; and 5) a "follow-me" function when a tethered drone is attached to a vehicle to remain tethered during operation. The tethered drones may also, when a UAV is tether mounted on a vehicle, be trained to follow a vehicle automatically while remaining tethered. The tethered drones, systems, and platforms as described herein may be customized to fulfill various usage needs and requirements.

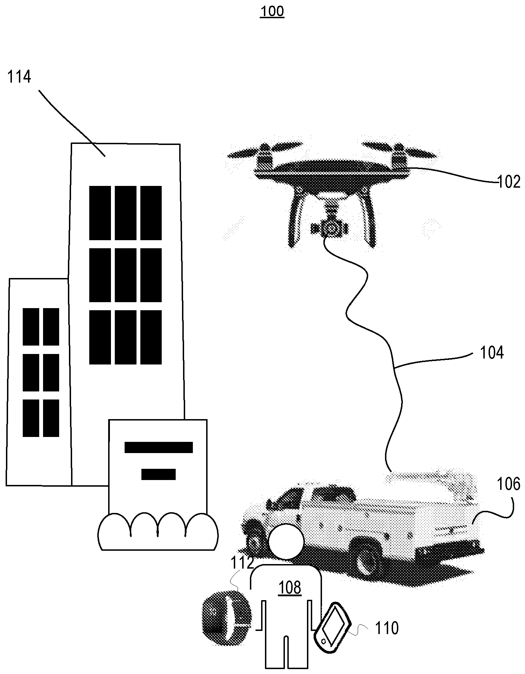

The embodiments, components, and processes of FIGs. 1-6 may be combined insofar as they fall within the scope of the appended claims.

The description of FIGS. 1-6 as well as the other written description is applicable across the figures regardless of restrictions imposed thereon, whether natural or artificial.

FIG. 1 is a pictorial representation of a tethered drone system. The tethered drone system 100 includes a tethered drone 102, a tether 104, a control vehicle 106, a user 108 utilizing a wireless device 110 and a smart watch 112, and a structure 114.

The tethered drone 102 represents an unmanned autonomous vehicle. The drone 102 may be configured to fly, drive, swim, crawl, wriggle, or otherwise propagate from one location to another. The drone 102 may be a flying device including several propellers to create substantial lift. The tethered drone may include various types of unmanned aerial vehicles, multirotor, quadcopters, and so forth. The tethered drone 102 may also utilize jets, emission drives (e.g., gasses, liquids, ions, etc.), ducts, or so forth.

The tethered drone 102 may include any number of camera and imaging systems for still images, video, x-rays, thermal/infrared imaging, ultra violet imaging, and so forth. For example, the tethered drone 102 may capture visible light as well as infrared light for evaluating structures, individuals, animals, trees/plants, and other organic and inorganic objects. The tethered drone 102 may be able to operate at levels that are beyond the capabilities of stand-alone drones because power is communicated to the drone 102 from the control vehicle 106. For example, the tethered drone 102 may carry loads, cargo, or tools that could not be lifted by battery only drones. The tethered drone 102 may also fly for time periods or indefinitely as compared to many drones that fly between 15 minutes and one hour.

The tethered drone 102 may include a battery back up in the event that power is lost or the tethered drone 102 needs to temporarily detach from the tether 104. For example, a battery or ultracapacitor may be utilized to ensure that the tethered drone 102 is able to complete an ongoing action before landing/docking safely. The tethered drone 102 may also be coated with solar panels to provide additional power for the motors or other components of the tethered drone.

The tethered drone may represent an unmanned autonomous vehicle (UAV). The UAV may be configured to travel and release additional orbital UAV charging stations above the Karman Line, which delineates the atmosphere between earth and outer space located around 62 miles (100 km) above the surface of the Earth. For example, a graphene tether 104 may allow the tethered drone 102 to travel above the Karman line. Space-based solar power (SBSP), fuel cells, ultra- capacitors, nuclear power, or other power generation/storage devices and techniques may be utilized to power the tethered drone 102. For example, the tethered drone 102 may travel to a specified altitude utilizing propellers before the tether 104 is released and jet engines carry the drone 102 above the Karman Line into low earth orbit. In low earth orbit, the tethered drone 102 may then act as a base, charging station, or communications station for other drones. The tethered drone 102 may also dock, integrate with, or tether to any number of satellites or orbital devices for charging, communications, astronomy, element/compound sampling, remote sensing, crop monitoring, and so forth. The tethered drone 102 may be launched by a control vehicle 106 which may also represent a high- altitude balloon (i.e., 45 km altitude capability).

A set of tethered drones may be utilized. For example, a first tethered drone 102 may carry the weight of the tether 104 while a second tethered drone positioned in series with the tether 104 may be released. Any number of tethered drones 102, from two to one hundred or more may, be interconnected in series or other patterns (e.g., parallel, circles of drones interconnected to form a cylinder, etc.). Additionally, the drone can be tethered to a droid astronaut drone that is used to perform activities that are beyond the limit of the tether drone. The astronaut drone can perform many of the tasks associated with a human astronaut, such as various sample collections, repairs and safety checks.

The tethered drone 102 may be tethered to a public safety, emergency service, or police vehicle (representing the control vehicle 106) that is used to monitor event occurrence, traffic congestion, vehicle speed, traffic accidents, and Amber alerts to assist local authorities and various public safety providers with traffic monitoring and traffic flow. When the need arises for a tethered drone 102 to be undetectable for instance in a police-based monitoring scenario the drone may be cloaked as a means to obscure or block the visible detection of the tethered drone 102 via the utilization of an inflight color matched video screen and color matching tether to match the color of the environment the tethered drone 102 is being used and as a means to limit the ability to identify the tethered drone 102. For example, panels of the tethered drone 102 may be utilized to match the environment around the tethered drone 102. Additionally, the tether 104 prevents the drone from being hacked or disrupted from a rogue control signal. An encrypted, virtual signal, or proprietary signal is utilized by the tether between the tethered drone 102 and the control vehicle 106 (or other connected devices/systems) to prevent unwanted access to the tethered drone 102.

The tethered drone 102 may be tethered to a building (i.e., structure 114) or vehicle (control vehicle 106) and used in crowded cities to find and indicate available parking in congested parking areas. The tethered drone 102 may utilize unique overhead views to provide various traffic and available parking data.

The tethered drone 102 may be tethered to a building power source and act as a centurion drone to monitor activity and visitors outside and at a building's points of entry. The centurion drone can provide a wider parameter of surveillance around a building's exterior.

The tethered drone 102 may be stored and then deployed during an emergency to more efficiently monitor the situation from an aerial viewpoint. The tethered drone 102 may also act as a wireless tower for performing wireless communications (e.g., cellular, Wi-Fi, etc.). The tether 104 is formed from a high-tensile strength material. The tether 104 may be composed of graphene. The tether 104 may also be formed from steel, carbon fiber, Kevlar, Zylon, glass, spider silk, boron nitride nanotubes, carbon nanotubes, or any number of other composites, mixtures, or combinations. The tether 104 may also include multiple layers to add strength, power conduction, and liquid delivery components. For example, a graphene layer with embedded conductors for communicating power may include fiber optics for communications and a rubber polymer, such as polyvinyl chloride, for communicating liquids to the tethered drone 102. The tether 104 may include any number of wires, cables, busses, fiber optics, hoses, or delivery mediums. The tether 104 delivers power and can deliver fluids stored in one or more reservoirs of the control vehicle 106 to the drone. A portion of the tether 104 proximate the tethered drone may stiffly or erectly extend from the top, bottom or sides of the tethered drone 102 to ensure that the tether 104 does not interfere with the propulsion systems (e.g., fans, propellers, jets, etc.). For example, batteries, generators, solar cells, fuel cells, or engines of the control vehicle 106 may communicate direct current or alternative current power to the drone 102.

The tethers 104 also employ automated docking systems for adding the tethers utilizing a tether interface (e.g., lifting off from a vehicle docking station to a tether 104 attachment station). As described herein, the tethered drone 102 may be tethered to the control vehicle 106. The tethered drone 102 may be connected to the user 108 or structure 114. Docking stations may also be utilized to attach other tools, back-up batteries, or other systems for the tethered drone 102.

The control vehicle 106 (or alternatively control system) may be utilized to transport, store, and launch the drone 102. For example, the control vehicle 106 may include one or more cradles, docking stations, launch pads, gantries, or so forth. The control vehicle 106 may both cover, secure, and launch the drone 102. Any number of latches, locks or securing mechanisms may secure and store the drone 102 for storage, travel, or so forth. The control vehicle 106 may also include any number of catapults, springs, levers, arms, or so forth utilized to facilitate launch of the drone 102. The control vehicle 106 may be configured to work with one or more drones at a time. The control vehicle 106 may also include reservoirs for pumping fluids, gasses, foams, slurries, or solids up to the drone 102. The drone 102 may have on or more outputs, nozzles, ports, or so forth for ejecting or otherwise communicating the materials received from the control vehicle 106.

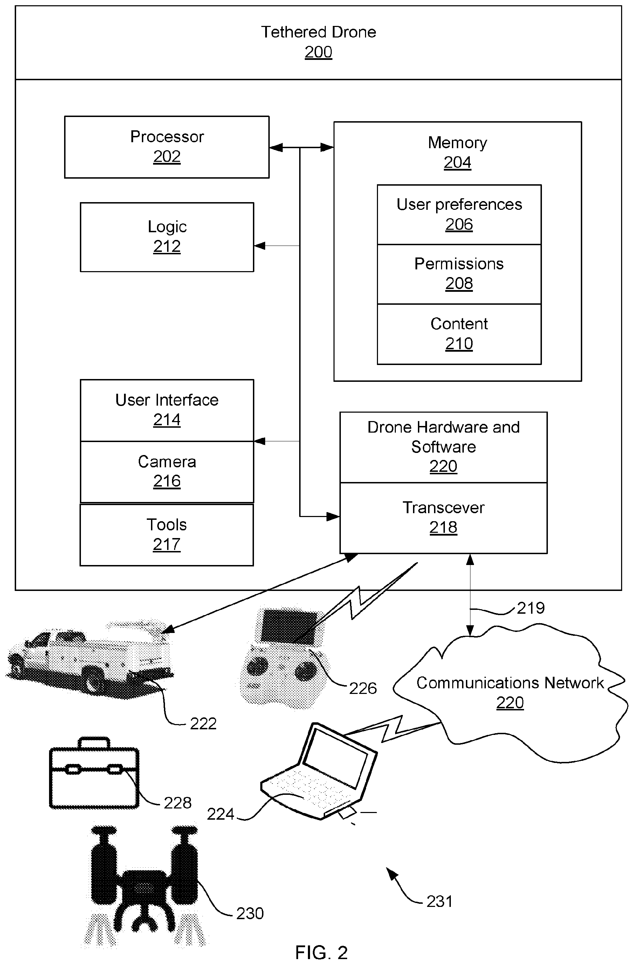

The user 108 may utilize interfaces and controls available through the control vehicle 106. For example, a traditional drone controller may communicate with the control vehicle 106 (or with the tethered drone 102) to control the movement and operations of the tethered drone 102. The user 108 may also utilize the wireless device 110 or FIG. 2 is a block diagram of a tethered drone 200. The tethered drone 200 may include a processor 202 memory 204, user preferences 206, permissions 208, content 210, logic 212, user interface 214, camera 216, tools 217, transceiver 218, tether 219, and hardware and software 220. The tethered drone 200 may communicate with communications network 220, and control systems 222, 224, 226, 228, and 230 (jointly "control systems 231). The tethered drone 200 may be represented by a single device. The tethered drone 200 may represent a number of networked drones that communicate and function together to perform the processes and tasks herein described. For example, tethered drones may be interconnected by a web of tether connections (e.g., in series, parallel, etc.). The tethered drones may also communicate as part of a mesh network. A master drone and slave drones may be utilized to accomplish the various processes herein described. For example, slave drones with multiple large rotors may carry and pump liquid to a master drone with a high pressure nozzle for washing windows and building exteriors.

As shown the control systems 231 may represent one or more vehicles, control centers, or devices that may communicate with the tethered drone 200 directly or indirectly through the communications network 220. Various control systems 231 including a utility vehicle, tethered drone controller, controller box, docking drone, and laptop are shown. Other control systems 231, such as robots, mother ships, satellites, all- terrain vehicles, military equipment, farming equipment, and space shuttle, are also envisioned.

The processor 202 is circuitry or logic enabled to control execution of a set of instructions, application, operating system, kernel, modules, or program. The processor 202 may be a microprocessor, digital signal processor, logic unit, application-specific integrated circuits (ASIC), field programmable gate arrays (FPGA), central processing unit (CPU), or other device suitable for controlling an electronic device including one or more hardware and software elements, executing software, instructions, programs, and applications, converting and processing signals and information, and performing other related tasks. The processor 202 may be a single chip (e.g. ASIC, FPGA, microprocessor, etc.) or may be integrated with other computing or communications elements.

The memory 204 is a hardware element, device, or recording media configured to store data for subsequent retrieval or access at a later time. The memory 204 may be static or dynamic memory 204. The memory 204 may include a hard disk, random access memory, cache, removable media drive, mass storage, or configuration suitable as storage for data, instructions, and information. The memory 204 and processor 202 may be integrated. The memory 204 may use any type of volatile or nonvolatile storage techniques and mediums. The memory may store user preferences 206, permissions 208, and content 210.

The memory 204 may store information retrieved by the tethered drone 200 (see for example FIG. 1). For example, the content 210 captured by the various devices and components, such as audio, video, and sensor data, may be stored and managed by the tethered drone 200. As a result, the applicable content 210 may be accessed in real-time or subsequently streamed or sent as needed. The memory 204 may store various data and information that are further associated with the content 210, such as date and time of capture, location, tools 217 utilized, observing device/user, type of device, fixed or mobile, authentication, facial/object recognition, and so forth.

The information may be integrated with the content to create augmented reality content. The memory 204 may also store hyperlinks, relevant data, or other references to interactive content that are accessible by communications received by the tethered drone 200.

The memory 204 may also store interactive content associated with the content 210 recorded on the tethered drone 200. The memory 204 may be partitioned for utilization by the various components of the tethered drone 200. The tethered drone 200 may include any number of computing and telecommunications components not specifically described herein for purposes of simplicity, such components, devices, or units may include busses, motherboards, circuits, ports, interfaces, cards, converters, adapters, connections, motors, propellers, engines, motor mounts, landing gear, booms, main done body, frame, global positioning system, jets, parachutes, actuators, controllers (i.e., electronic speed controllers, flight controllers, etc.), booms, gimbals (e.g., motors, control units, etc.), sensors (e.g., collision avoidance, radiation, chemical, speed/velocity, pressure, temperature, transceivers, lidar, infrared, time-of-flight, etc.), displays, antennas, batteries, and so forth that are referenced by the drone hardware and software 220.

The user preferences 206 are settings, criteria, and parameters for controlling the functions, actions, controls, and communications features of the tethered drone 200. The user preferences 206 may control registering and authenticating devices/users to control the tethered drone 200 based on available commands, applicable circumstances, feedback, and selections by a user. The user preferences 206 may also control actions taken if the connection with the tether 219 is lost. For example, the tethered drone 200 may automatically return to a designated location or signal if the tether 219 is severed.

The user preferences 206 may also include one or more names for a network broadcast, managed, accessed, utilized, distributed by the tethered drone 200. For example, the tethered drone 200 may activate a wireless router that communicates utilizing one or more secured, public, or private Wi-Fi, cellular, or other networks. The thcuser preferences 206 may store a number of different user profiles associated with a number of administrators or users or the tethered drone 200 or the control system 231. The user preferences 206 may store hardware identifiers, software identifiers, nicknames, contact lists, and access information including usernames and passwords, and other similar details, information and settings.

The permissions 208 are the parameters that locally govern the management and utilization of the content 210. For example, the permissions 208 may establish types of content 210, authorize distribution, administrative access, sharing rights, and so forth for content 210 distributed through the tethered drone 200, as well as other allowed or prohibited content. A number of users (e.g., administrators, managers, security personnel, authorized users, etc.) may utilize the tethered drone 200 and as a result the permissions 208 may set limits, settings, and parameters that locally govern utilization of the tethered drone 200. For example, the permissions 208 may establish authorization levels associated with content 210 that users of the tethered drone 200 may store and communicate to the control system 231.

As previously noted, the content 210 may store generated or measured by fixed cameras, sensors, or users, such as those using the wireless devices 222, 224, and 226. The captured content 210 may be stored temporarily, long-term, or permanently in the content 210 for subsequent access, management, or display (e.g., live stream to the wireless devices 222, 224, and 226). The content 210 may also be mirrored or stored in one or more cloud networks. For example, the content 210 may be automatically synchronized with a data storage server of a cloud service/network. By storing the data in the tethered drone 200 as well as in the cloud, the bandwidth utilized may be reduced, the time required to retrieve the content 210 is reduced, and other resources may be conserved.

The content 210 or the user preferences may also store preferences governing utilization, analysis, or sharing of the content 210. For example, the user preferences 206 may specify that the content 210 may be streamed to the control system 222 but may not be shared beyond that one authorized device/user. The content 210 that is generated from the tethered drone 200 and other devices may be saved strictly to the tethered drone 200, control systems 231, or may be saved to remote devices or networks, such as a content- based social networks, cloud network services, content servers, or so forth. The optical and sensor data, files, feed, and information may be saved in the content 210 or saved as a link accessible from one or more other drones or through other networks.

The user interface 214 is an audio, visual, or tactile interface for displaying video, images, data, text, and information to a user and receiving user input, feedback, selections, and commands for controlling the tethered drone 200. The user interface 214 may generate a graphical user interface for communication to one or more interconnected displays or the control systems 231. The user interface 214 may include any number of joysticks, levers, buttons, scroll wheels, screens, touch interfaces, or other elements for receiving and outputting information to the tethered drone 200 for controlling power, hovering rotation, altitude, throttle, yaw, pitch, roll, trim, camera control (e.g., interconnected camera gimble movement, video/image capture, imaging type, etc.). The user interface 214 may provide an interface for receiving input from a transmitter, controller, touch screens, a mouse, microphones, gesture controls, keyboards, peripherals, or so forth. As a result, the user interface 214 may also include a keyboard, a touch screen, a Braille interface, speakers, a microphone, and other similar input and output devices. The wireless devices 222, 224, and 226 may also interact directly with the user interface 214 for receiving input and displaying information.

The camera 216 is a video and image capture device(s). The camera 216 may also represent dedicated or fixed video cameras associated with a venue or location. The images may include still and video images that may be retrieved and stored in the memory 204 or communicated directly to one or more other users. The camera 216 may be integrated with the tethered drone 200. The camera may be externally linked utilizing any number of wireless or wired connections, such as a high definition media interface (HDMI), USB, Bluetooth, or Wi-Fi connection. The camera 216 may capture the content 210 for storage. The camera 216 may also be representative of the cameras of the control systems 231 that may transmit content to the tethered drone 200. For example, the tethered drone 200 may act as a video router with images, audio, video, text input or a combination thereof communicated from and received by the tethered drone 200.

The transceiver 218 is a component comprising both a transmitter and receiver which may be combined and share common circuitry on a single housing. The transceiver 218 may communicate utilizing Bluetooth, Wi-Fi, ZigBee, Ant+, near field communications, wireless USB, infrared, mobile body area networks, ultra-wideband communications, cellular (e.g., 3G, 4G, 5G, PCS, GSM, etc.) or other suitable radio frequency standards, networks, protocols, or communications. The transceiver 218 may include a number of different transceivers configured to utilize distinct communications protocols and standards. For example, the transceiver 218 may be a hybrid transceiver that supports a number of different communications. For example, the transceiver 218 may communicate utilizing Ethernet, powerline networking, Wi-Fi, Bluetooth, and cellular signals.

The tether 219 may be connected between the tethered drone 200 and one or more of the control systems 231 by one or more users or technicians. The tether 219 may include magnetic ends with an interface for easily connecting to the control systems 231. For example, magnetic pins may align for communicating power and data between the control systems 231 and the tethered drone 200. The interface of the tether 219 for both the tethered drone and the control systems 231 may also include any number of locking interfaces and ports (e.g., bearing interfaces, screw type interfaces, release-based interfaces, etc.).

The drone hardware and software 220 are the additional hardware and software components and units that allow the tethered drone 200 to function and interact. The tethered drone 200 includes motor controls for controlling the flight, position, and orientation of the tethered drone. The drone hardware and software 220 may include logical components for converting signals into media content and interactive content that may be displayed to display. The drone hardware and software 220 may also incorporate network interface elements for communicating with the communications network 222 which may include a Wi-Fi, cellular, powerline, satellite, cable, DSL, IPTV, or other networks. For example, the content 210 may be decoded and reformatted for display by the control systems. For example, the drone hardware and software 220 may format the satellite signals for display to the user and similarly, may function to display a message icon at the same time the standard content is displayed to the user.

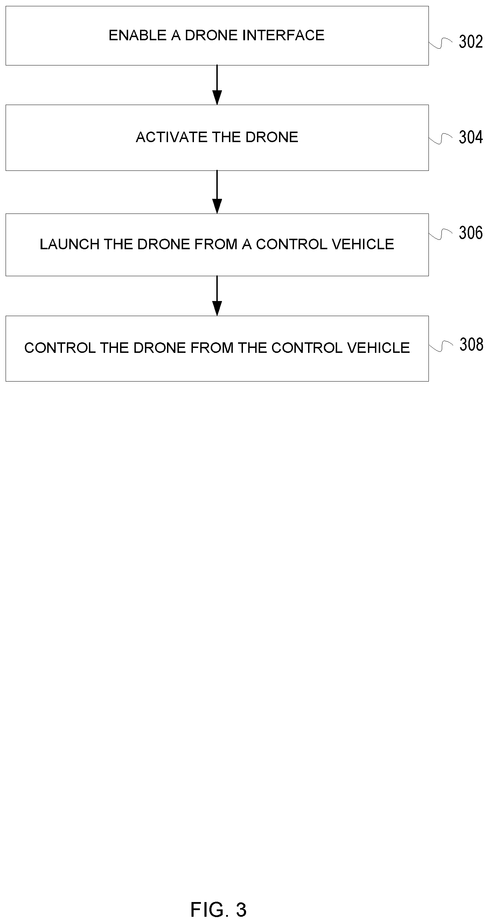

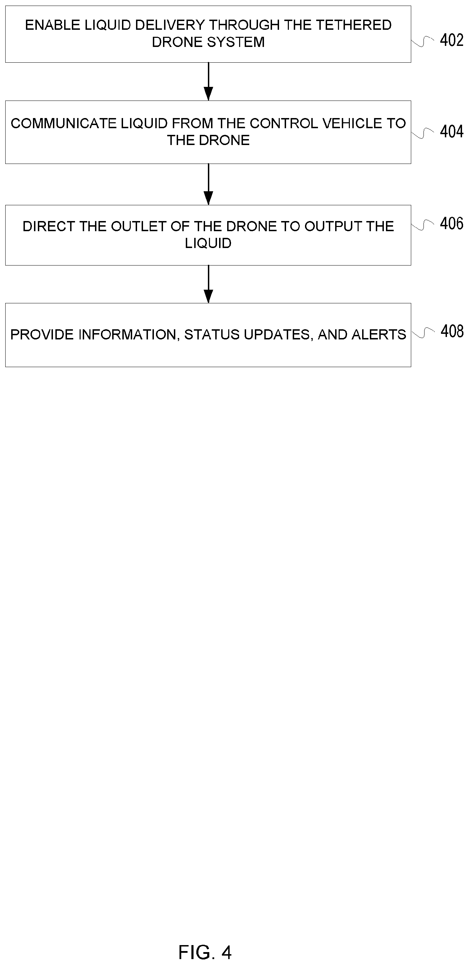

FIG. 3 is a flowchart of a process for controlling a tethered drone. The process of FIGs. 3 and 4 may be implemented by a tethered drone system, such as those shown in FIGs. 1 and 2. The tethered drone system may include a flying drone physically connected to a control vehicle by a tether. The tether may include one or more wires, cables, buses, hoses, or other communications mediums for sending signals, fluids, solids, or so forth.

The process may begin by enabling a drone interface (step 302). The drone interface may be independent or integrated with the control vehicle. The drone interface may include joy sticks, switches, buttons, toggles, touch screens, virtual reality controls, augmented reality controls, gesture controls (e.g., accelerometers, gyroscopes, magnetometers, etc.), or so forth. The user may power on the drone interface (e.g., utilizing a switch, button, etc.). The drone interface may also be integrated in a briefcase, carrying box, or so forth.

Next, the tethered drone system activates the drone (step 304). The drone may be activated by a control signal sent from the drone interface to the drone. For example, the drone may be a flying drone with multiple propellers. The drone may be a drone that utilizes suction or negative pressure to climb or ascend buildings or other structures. The drone may utilize robotic arms to climb or wheels to move from place to place. Jet propulsion may also be utilized in water or air.

Next, the tethered drone system launches the drone from a control vehicle (step 306). The drone is a mobile platform for moving the drone between locations (e.g., utility vehicle, all-terrain vehicle, truck, car, train, ferry, plane, hovercraft, motorcycle, bicycle, etc.). The control vehicle may provide a controlled environment from which to operate the drone. The UAV is equipped to provide industrial services though the addition of interchangeable cleaning liquids through the tether for machinery, table, window, household, and toilet cleaning, sterilization, and maintenance. For example, the control vehicle may include one or more camera systems for monitoring the drone and environment of the control vehicle, climate controls (e.g., air conditioning, heaters, etc.), batteries or power generators for powering the drone through the tether, reservoirs for storing fluids, gases, or solids communicated through the tether, pumps for pumping fluids or solids through a hose of the tether, and the drone interface. The control vehicle is a utility vehicle utilized to wash and inspect windows of high rises and other buildings.

The tethered drone system may include a cradle, docking station, storage bin, compartment, cover, port, mini-hanger, or other components that may be integrated with or attached to the control vehicle. The storage may be utilized to securely move the drone from location to location before launching the drone.

Next, the tethered drone system controls the drone from the control vehicle (step 308).

The drone interface may include controls for managing the altitude, pitch, yaw, speed, orientation, direction, integrated tools, components, and functions, externally connected tools, components, and functions.

FIG. 4 is a flowchart of a process for utilizing a tethered drone system. The process of FIG. 4 may also be performed by the tethered drone system. The process of FIG. 4 may begin by enabling liquid delivery through the tethered drone system (step 402). The process of FIG. 4 may be performed as part of the process of step 308 of FIG. 3.

Next, the tethered drone system communicates liquid from the control vehicle to the drone (step 404). Although liquids are mentioned specifically, the drone may communicate liquids, foams, slurries, gases, solids, or other compounds for extinguishing fires, cleaning, performing testing or analysis, imaging/photography, or so forth. The liquids may be communicated and expelled from the drone in real-time. For example, the drone may include a nozzle for spraying the liquid. For example, the vehicle may pump the liquid to the drone under pressure for expulsion from the drone. The tethered drone may include a reservoir. The liquid may be stored in the drone for utilization. Fluid flowing through the tether may cause variations in drone flying dynamics.

Next, the tethered drone system directs an outlet of the drone to output the liquid (step 406). The outlet may represent any number of nozzles, jets, faucets, or so forth. The spray pattern and output volume may be adjusted controlled from the drone interface. In addition, pumps, condensers, aerators, sprayers, or other components may also be utilized. The drone may compress, focus, or otherwise direct the liquid.

Next, the tethered drone system provides information, status updates, and alerts (step 408). The information and data of step 408 may relate to separate and combined performance of the drone, tether, and control vehicle. For example, the information may indicate information, such as flight/operation time, motor temperatures, motor revolutions per minute, outside temperature, humidity, light conditions, exterior noise levels, battery reserve levels, fluid reserves, fluid communicated, altitude, location, orientation, proximity to people, structures, and devices, generator/battery reserves of the control vehicle, and so forth. The alerts may indicate if there are any errors (e.g., insignificant, minor, major, catastrophic, etc.), imminent failures, maintenance issues, or problems with the tethered drone system.

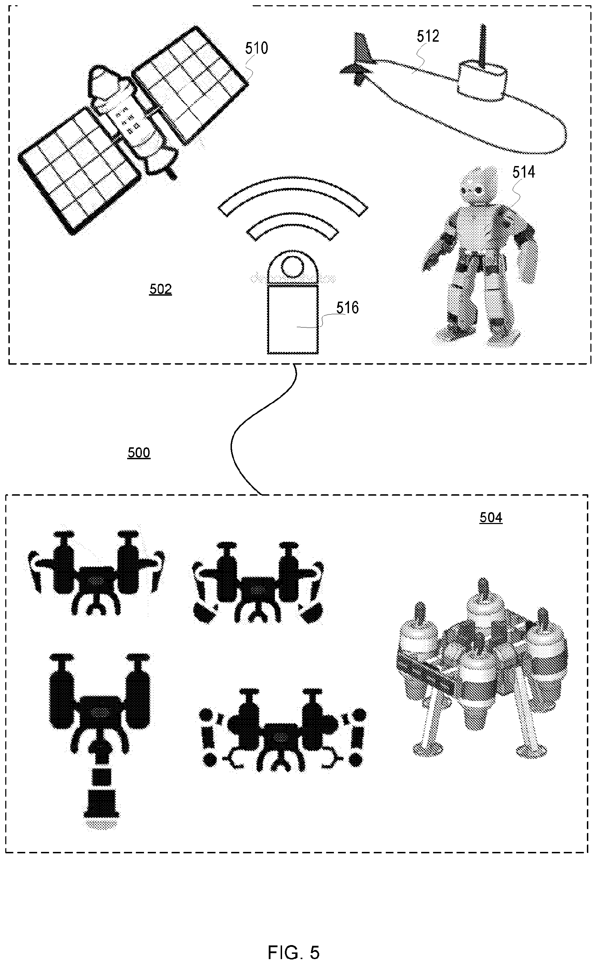

FIG. 5 is a pictorial representation of a tethered drone system 500 operated from a platform. The tethered drone system 500 may include a platform 502 operating a tethered drone 504 through a tether 506. The platform 502 may include, but is not limited to, a satellite 510, a submarine 512, robot 514, and/or a command center 516. Other platforms may include drone ships, utility vehicles, carry boxes, autonomous robots, flying ship hubs, shuttles, orbital vehicles, and so forth. The tethered drone 504 may represent any number of air, land, water, or space-based drones. The tethered drones 504 may perform material retrieval, repairs, exploration, remote sensing, or any number of other processes. The platform 502 may be operated by one or more service providers, operators, individuals, private entities, organizations, governments, or other parties. The command center 516 may represent a private Internet based control center that may remotely control the tethered drone 504. The command center 516 may connect directly to the tethered drone 504 or may do so through communications with the satellite 510, the submarine 512, robot 514, or another platform 502. The tethered drone system 500 may utilize satellite, Wi-Fi, Bluetooth, cellular, acoustic, wired (e.g., Fiber optics, twisted pairs, serial, etc.), or other long-range or short-range wireless or wired signals, mediums, protocols, or standards. For example, terrestrial command centers may communicate with the satellite 510 to perform any number of tasks with the tethered drone 504. Audio, video, data, and sensor readings may be shared between the various devices and systems of the tethered drone system 500.

The platform 502 may represent a control vehicle, station, or object. The tethered drone 504 may be integrated with, attached to, or interface with the platform 502. For example, the tethered drone 504 may be manufactured as an integral part of the platform 502. In another example, the tethered drone 504 may be attached to or connected to the platform 502 (at any time).

The robot 514 may represent any number of human controlled, autonomous, or other vehicles, humanoids, or systems. The tethered drone 504 may be deployed to perform tasks that are out of reach, dangerous, involve unknown objects/chemicals/animals, or otherwise require investigation and analysis.

The tethered drone system 500 may be utilized for or to enhance any number of systems, such as solar energy operations, industrial and commercial services, engineering, manufacturing, space exploration, mining (e.g., undersea, terrestrial, space-based, etc.), astronomy, scientific analysis, crop and food monitoring, and other applicable operations.

The tethered drone system 500 may be utilized with multiple tethered drones that are each connected to the platform 502 or to each other. For example, the tethered drones may operate as a swarm, hive, or organization of drones to perform various tasks.

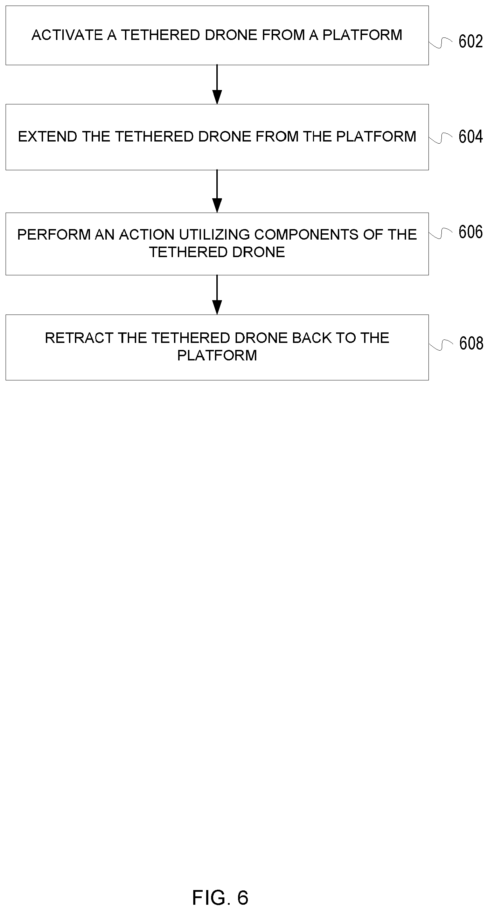

FIG. 6 is a flowchart of a process for operating a tethered drone system from a platform.

The tethered drone may represent any number of environments, drones, and associated platforms as previously described including aerial, space-based, water (e.g., freshwater, saltwater, etc.), land-based, and so forth.

The process may begin by activating a tethered drone from a platform (step 602). The platform may represent an orbital satellite. The platform may represent a submarine or drone ship. The tethered drone may include one or more thrusters, rockets, jets, propellers, or other drives for propelling the tethered drone in the applicable medium (e.g., space, water, air, etc.). The activation of step 602 may include powering on the tethered drone, executing one or more applications, operating systems, kernels, or software instructions, activating hardware, components, firmware, and features of the tethered drone, and engaging the platform to control the tethered drone.

Next, the tethered drone system is configured to extend the tethered drone from the platform (step 604). During step 604, the tethered drone is configured to be driven or propelled from the platform to an applicable position, location, object, structure, or coordinates. The tether is configured to be released based on a pulling force from the tethered drone or is configured to be automatically spooled out by the platform. The shape, size, and configuration of the tethered drone may also vary based on the applicable environment. For example, the tether (and tethered drone) may be shielded against radiation, space dust, and micro projectiles in space-based applications. In another example, the tether (and tethered drone) may be waterproof, pressure protected (e.g., deep water), corrosion resistant, impact resistant, and so forth. The tethered drone may utilize any number of redundant systems to ensure operation when connected to the tether as well as when this connected (intentionally or unintentionally). For example, the tethered drone may include secondary transceivers that may be utilized in the environment in response to the tether being severed or damaged.

Next, the tethered drone system performs an action utilizing components of the tethered drone (step 606). The tethered drone may be equipped with any number of components, subsystems, features, or functions. The tethered drone may include one or more cameras and sensors for close proximity, midrange, or long-range observation, remote-sensing, monitoring, analysis, or so forth. The cameras may utilize any number of wavelengths (e.g., visible light, ultraviolet, infrared, x-ray, etc.) and visualization processes. Any number of spectroscopy systems may be integrated with the tethered drone. The cameras may also represent high end telescopes that may broadcast applicable images to a base station, control vehicle, command center, or other associated devices/systems. The tethered drone may include one or more sampling devices (e.g., suction and collection devices, drills, grasping devices, etc.) that may be utilized for sampling gases, liquids, solids, and/or other compounds or mixtures accessible by the tethered drone. For example, the tethered drone may include one or more arms for retrieving samples, objects, or materials. The tethered drone may also include any number of tools (e.g., welders, saws, drills, impact devices, etc.) for building, maintaining, or repairing any number of objects, structures, vehicles, or so forth. The tethered drone may also be utilized to perform surgery on an individual that is out of reach (e.g., a mountain climbing accident, etc.). The samples may be collected for exploration, mining, threat analysis, environmental protection, scientific/chemical analysis, or any number of other purposes. Sample analysis may be performed by the tethered drone or the platform. For example, a spectroscopy system of the tethered drone or the platform may perform optical analysis of the sample. The tethered drone may only perform collection with all additional analysis and processing performed by the platform or a secondary device, system, equipment, users, or so forth. The tethered shown may also include one or more offensive or defensive weapons for animals, plant life, people, projectiles, or so forth. Some examples may include guns, electrifying devices, rockets, grenades, optical weapons (e.g., lasers, focus light, etc.), sonic weapons, or other applicable weapons systems. The action of step 606 may include firing, discharging, or otherwise utilizing the applicable weapon system.

Next, the tethered drone system retracts the tethered drone back to the platform (step 608). As previously noted, the tethered drone may move, maneuver, or propagate utilizing motors, engines, jets, thrusters, or other propulsion mechanisms integrated with or attached to the tethered drone. Alternatively, the tethered drone may be retracted utilizing forces applied to the tether, such as reeling in the tethered drone utilizing the applicable tether. During step 608, the tethered drone may be docked with, stored within, attached to, or placed on the platform.

The illustrative embodiments are not to be limited to the particular embodiments and examples described herein. In particular, the illustrative embodiments contemplate numerous variations in the type of ways in which embodiments of the invention may be applied to numerous tethered drone applications on land, sea, air, or in space. The foregoing description has been presented for purposes of illustration and description. It is not intended to be an exhaustive list or limit any of the disclosure to the precise forms disclosed. It is contemplated that other alternatives or exemplary aspects are considered included in the disclosure. The description is merely examples of embodiments, processes or methods of the invention For the foregoing, it can be seen that the disclosure accomplishes at least all of the intended objectives.

The previous detailed description is of a small number of embodiments for implementing the invention and is not intended to be limiting in scope. The invention is only limited by the scope of the appended claims.

## Claims

1. A tethered drone system (100, 500), comprising:
a tethered drone (102, 200, 504) including a tether (104, 219, 506), wherein the tether (104, 219, 506) includes a conductor configured to communicate at least power and control signals a platform, and
a control system (231) configured to control the tethered drone (102, 200, 504), wherein the control system (231) is configured to provide power for the tethered drone (102, 200, 504), and
wherein the control system (231) includes a user interface (214) for controlling the control signals;
the control signals including an encrypted, virtual or proprietary signal used by the tether (104, 219, 506) between the tethered drone (102, 200, 504) and the control system (231) to prevent unwanted access to the tethered drone (102, 200, 504); **characterised in that** the tether (104, 219, 506) is configured to employ an automated docking system for adding the tether (104, 219, 506) to the drone using a tether interface; and
wherein the tethered drone system is configured to extend the tethered drone from the platform, wherein the tethered drone is configured to be driven or propelled from the platform to an applicable position, location, object, structure, or coordinates,
wherein
the tether (104,219, 506) is configured to be released based on a pulling force from the tethered drone (102, 200, 504) or is configured to be automatically spooled out by the platform.

2. The tethered drone system of claim 1 , wherein the tether (104, 219, 506) is configured to communicate a liquid from the control system (231) to an outlet extending from the tethered drone (102, 200, 504).

3. The tethered drone system of claim 1, further comprising:
one or more cameras (216) integrated with the tethered drone (102, 200, 504).

4. The tethered drone system of claim 1, further comprising:
a plurality of propellers providing lift and throttle to the tethered drone (102, 200, 504).

5. The tethered drone system of claim 1, wherein the control system (231) is a utility truck.

6. The tethered drone system of claim 1 , wherein the user interface (214) includes controls for altitude and directional controls.

7. The tethered drone system of claim 1, wherein the control system (100, 500) includes a landing pad for landing the tethered drone (102, 200, 504).

8. The tethered drone system of claim 1, wherein the control system (231) further includes a generator for powering the tethered drone (102, 200, 504), and a pump for pumping a fluid up through the tether (104, 219, 506).

9. The tethered drone system of claim 1 , wherein the tethered drone (102, 200, 504) includes a back- up battery in case the tether (104, 219, 506) fails.

10. The tethered drone system of claim 1, wherein the tethered drone system (100, 500) includes a control vehicle (106) which includes a cradle for launching and storing the tethered drone (102, 200, 504).

11. The tethered drone system of claim 1, wherein the tether (104, 219, 506) is formed at least in part of graphene.

12. The tethered drone system of claim 1, wherein the tethered drone (102, 200, 504) is autonomously configured to be controlled utilizing the control signals sent from the control system wherein the control system is a control vehicle (106).

13. The tethered drone system according to claim 1, wherein the tethered drone includes at least a first tethered drone arranged to carry the weight of the tether and at least a second tethered drone connected in series with the at least first tethered drone.

14. The tethered drone system according to claim 1, wherein the tethered drone (102, 200, 504) is a first tethered drone and includes a receptacle for storing a fluid, wherein the tether (104, 219, 506) includes a conductor configured to communicate the fluid; and wherein the tethered drone system (100, 500) includes a second tethered drone connected to the first tethered drone by a tether, the second tethered drone is configured to deliver the fluid through one or more nozzles for spraying; and the control system (231) is configured to control the first tethered drone (102, 200, 504) and the second tethered drone.

15. A method for utilizing a tethered drone system, said tethered drone system comprising:
a tethered drone (102, 200, 504) including a tether (104, 219, 506), wherein the tether (104, 219, 506) includes a conductor configured to communicate at least power and control signals a platform, and
a control system (231) configured to control the tethered drone (102, 200, 504), the control system (231) being configured to provide power for the tethered drone (102, 200, 504), and the control system (231) including a user interface (214) for controlling the control signals; said method comprising the steps of:
activating controls for the tethered drone (102, 200, 504);
launching the tethered drone from the control system (231); and
controlling the tethered drone (102, 200, 504) from the user interface (214) of the control system (231) utilizing the tether (104, 219, 506) between the control system (231) and
the tethered drone (102, 200, 504),. the control signals including an encrypted, virtual or proprietary signal used by the tether (104, 219, 506) between the tethered drone (102, 200, 504) and the control system (231) to prevent unwanted access to the tethered drone (102, 200, 504); **characterised in that** the tether (104, 219, 506) is configured to employ an automated docking system for adding the tether (104, 219, 506) to the drone using a tether interface; and wherein the tethered drone system is configured to extend the tethered drone from the platform, wherein the tethered drone is configured to be driven or propelled from the platform to an applicable position, location, object, structure, or coordinates, wherein the tether (104,219, 506) is configured to be released based on a pulling force from the tethered drone (102, 200, 504) or is configured to be automatically spooled out by the platform.

16. The method of claim 15, further comprising:
communicating a liquid through the tether (104, 219, 506).

17. The method of claim 16, wherein the liquid is output by the tethered drone (102, 200, 504) .

18. The method of claim 15, further comprising:
capturing video from the tethered drone (102, 200, 504) and the control system (231).

19. The method of claim 15, wherein the tethered drone (102, 200, 504) is configured to operate autonomously based on logic (212).

## Patentansprüche

1. Gefesseltes Drohnensystem (100, 500), das Folgendes aufweist:
eine gefesselte Drohne (102, 200, 504), die eine Fesselung (104, 219, 506) beinhaltet, wobei die Fesselung (104, 219, 506) einen Leiter beinhaltet, der zum Übermitteln zumindest von Stromversorgungs- und Steuersignalen konfiguriert ist,
eine Plattform und
ein Steuersystem (231), das zum Steuern der gefesselten Drohne (102, 200, 504) konfiguriert ist, wobei das Steuersystem (231) zum Versorgen der gefesselten Drohne (102, 200, 504) mit Energie konfiguriert ist, und
wobei das Steuersystem (231) eine Benutzerschnittstelle (214) zum Steuern der Steuersignale konfiguriert ist,
die Steuersignale ein verschlüsseltes, virtuelles oder prioritäres Signal beinhalten, das von der Fesselung (104, 219, 506) zwischen der gefesselten Drohne (102, 200, 504) und dem Steuersystem (231) verwendet wird, um unerwünschten Zugriff auf die gefesselte Drohne (102, 200, 504) zu verhindern; **dadurch gekennzeichnet, dass** die Fesselung (104, 219, 506) zum Einsetzen eines automatischen Andocksystems zum Hinzufügen der Fesselung (104, 219, 506) zu der Drohne unter Verwendung einer Fesselungsschnittstelle konfiguriert ist, und
wobei das gefesselte Drohnensystem zum Ausfahren der gefesselten Drohne von der Plattform konfiguriert ist, wobei die gefesselte Drohne konfiguriert ist, um von der Plattform zu einer bzw. einem zutreffenden Position, Ort, Objekt, Struktur oder Koordinaten gefahren oder getrieben zu werden,
wobei die Fesselung (104, 219, 506) konfiguriert ist, um auf Basis einer Zugkraft von der gefesselten Drohne (102, 200, 504) freigegeben zu werden, oder konfiguriert ist, um von der Plattform automatisch ausgegeben zu werden.

2. Gefesseltes Drohnensystem nach Anspruch 1, wobei die Fesselung (104, 219, 506) zum Übermitteln einer Flüssigkeit vom Steuersystem (231) zu einem Auslass, der sich von der gefesselten Drohne (102, 200, 504) erstreckt, konfiguriert ist.

3. Gefesseltes Drohnensystem nach Anspruch 1, das ferner Folgendes aufweist:
ein oder mehr Kameras (216), die in die gefesselte Drohne (102, 200, 504) integriert sind.

4. Gefesseltes Drohnensystem nach Anspruch 1, das ferner Folgendes aufweist:
mehrere Propeller, die der gefesselten Drohne (102, 200, 504) Auftrieb und Schub verleihen.

5. Gefesseltes Drohnensystem nach Anspruch 1, wobei das Steuersystem (231) ein Nutzfahrzeug ist.

6. Gefesseltes Drohnensystem nach Anspruch 1, wobei die Benutzerschnittstlle (214) Bedienelemente für Höhen- und Richtungssteuerung beinhaltet.

7. Gefesseltes Drohnensystem nach Anspruch 1, wobei das Steuersystem (100, 500) einen Landeplatz zum Landen der gefesselte Drohne (102, 200, 504) beinhaltet.

8. Gefesseltes Drohnensystem nach Anspruch 1, wobei das Steuersystem (231) ferner einen Generator zum Versorgen der gefesselten Drohne (102, 200, 504) mit Energie und eine Pumpe zum Hochpumpen eines Fluids durch die Fesselung (104, 219, 506) beinhaltet.

9. Gefesseltes Drohnensystem nach Anspruch 1, wobei die gefesselte Drohne (102, 200, 504) für den Fall, dass die Fesselung (104, 219, 506) ausfällt, eine Reservebatterie beinhaltet.

10. Gefesseltes Drohnensystem nach Anspruch 1, wobei das gefesselte Drohnensystem (100, 500) ein Steuerfahrzeug (106) beinhaltet, das einen Schlitten zum Starten und Aufbewahren der gefesselten Drohne (102, 200, 504) beinhaltet.

11. Gefesseltes Drohnensystem nach Anspruch 1, wobei die Fessel (104, 219, 506) zumindest teilweise aus Graphen hergestellt ist.

12. Gefesseltes Drohnensystem nach Anspruch 1, wobei die gefesselte Drohne (102, 200, 504) autonom konfiguriert ist, um unter Nutzung der vom Steuersystem gesendeten Steuersignale gesteuert zu werden,
wobei das Steuersystem ein Steuerfahrzeug (106) ist.

13. Gefesseltes Drohnensystem nach Anspruch 1, wobei die gefesselte Drohne mindestens eine erste gefesselte Drohne, die zum Tragen des Gewichts der Fessel konfiguriert ist, und mindestens eine zweite gefesselte Drohne, die mit der mindestens einen ersten gefesselten Drohne in Reihe geschaltet ist, beinhaltet.

14. Gefesseltes Drohnensystem nach Anspruch 1, wobei
die gefesselte Drohne (102, 200, 504) eine erste gefesselte Drohne ist und ein Behältnis zur Aufbewahrung von Fluid beinhaltet, wobei die Fesselung (104, 219, 506) einen Leiter beinhaltet, der zur Übermittlung des Fluids konfiguriert ist, und wobei das gefesselte Drohnensystem (100, 500) Folgendes beinhaltet
eine zweite gefesselte Drohne, die über eine Fesselung mit der ersten gefesselten Drohne verbunden ist, wobei die zweite gefesselte Drohne zur Abgabe des Fluids durch ein oder mehr Düsen zum Versprühen konfiguriert ist, und
das Steuersystem (231) zum Steuern der ersten gefesselten Drohne (102, 200, 504) und der zweiten gefesselten Drohne konfiguriert ist.

15. Verfahren zur Nutzung eines gefesselten Drohnensystems, wobei das gefesselte Drohnensystem Folgendes aufweist:
eine gefesselte Drohne (102, 200, 504), die eine Fesselung (104, 219, 506) beinhaltet, wobei die Fesselung (104, 219, 506) einen Leiter beinhaltet, der zum Übermitteln zumindest von Stromversorgungs- und Steuersignalen konfiguriert ist,
eine Plattform und
ein Steuersystem (231), das zum Steuern der gefesselten Drohne (102, 200, 504) konfiguriert ist, wobei das Steuersystem (231) zum Versorgen der gefesselten Drohne (102, 200, 504) mit Energie konfiguriert ist, und das Steuersystem (231) eine Benutzerschnittstelle (214) zum Steuern der Steuersignale beinhaltet, wobei das genannte Verfahren die folgenden Schritte aufweist:
Aktivieren von Bedienelementen für die gefesselte Drohne (102, 200, 504);
Starten der gefesselten Drohne vom Steuersystem (231); und
Steuern der gefesselten Drohne (102, 200, 504) von der Benutzerschnittstelle (214) des Steuersystems (231) unter Einsatz der Fesselung (104, 219, 506) zwischen dem Steuersystem (231) und der gefesselten Drohne (102, 200, 504), wobei die Steuersignale ein verschlüsseltes, virtuelles oder proprietäres Signal beinhalten, das von der Fesselung (104, 219, 506) zwischen der gefesselten Drohne (102, 200, 504) und dem Steuersystem (231) verwendet wird, um unerwünschten Zugriff auf die gefesselte Drohne (102, 200, 504) zu verhindern; **dadurch gekennzeichnet, dass** die Fesselung (104, 219, 506) zum Einsetzen eines automatischen Andocksystems zum Hinzufügen der Fesselung (104, 219, 506) zu der Drohne unter Verwendung einer Fesselungsschnittstelle konfiguriert ist, und wobei das gefesselte Drohnensystem zum Ausfahren der gefesselten Drohne von der Plattform konfiguriert ist, wobei die gefesselte Drohne konfiguriert ist, um von der Plattform zu einer bzw. einem zutreffenden Position, Ort, Objekt, Struktur oder Koordinaten gefahren oder getrieben zu werden, wobei die Fesselung (104, 219, 506) konfiguriert ist, um auf Basis einer Zugkraft von der gefesselten Drohne (102, 200, 504) freigegeben zu werden, oder konfiguriert ist, um durch die Plattform automatisch ausgegeben zu werden.

16. Verfahren nach Anspruch 15, das ferner Folgendes aufweist:
Übermitteln einer Flüssigkeit durch die Fessel (104, 219, 506).

17. Verfahren nach Anspruch 16, wobei die Flüssigkeit von der gefesselten Drohne (102, 200, 504) ausgegeben wird.

18. Verfahren nach Anspruch 15, das ferner Folgendes aufweist:
Erfassen von Videos von der gefesselten Drohne (102, 200, 504) und dem Steuersystem (231).

19. Verfahren nach Anspruch 15, wobei die gefesselte Drohne (102, 200, 504) für autonomen Betrieb auf Basis von Logik (212) konfiguriert ist.

## Revendications

1. Système de drone captif (100, 500), comprenant :
un drone captif (102, 200, 504) incluant une attache (104, 219, 506), où l'attache (104, 219, 506) inclut un conducteur configuré pour communiquer au moins des signaux de puissance et de commande ;
une plate-forme, et un système de commande (231) configuré pour commander le drone captif (102, 200, 504), où le système de commande (231) est configuré pour fournir de la puissance pour le drone captif (102, 200, 504), et où le système de commande (231) inclut une interface d'utilisateur (214) pour commander les signaux de commande ;
les signaux de commande incluant un signal crypté, virtuel ou propriétaire utilisé par l'attache (104, 219, 506) entre le drone captif (102, 200, 504) et le système de commande (231) pour empêcher un accès indésirable au drone captif (102, 200, 504) ;
**caractérisé en ce que** l'attache (104, 219, 506) est configurée pour employer un système d'amarrage automatisé pour ajouter l'attache (104, 219, 506) au drone en utilisant une interface d'attache ; et
où le système de drone captif est configuré pour étendre le drone captif à partir de la plate-forme, où le drone captif est configuré pour être piloté ou propulsé à partir de la plate-forme jusqu'à une position, une localisation, un objet, une structure, ou des coordonnées applicable/s, où l'attache (104, 219, 506) est configurée pour être libérée sur la base d'une force de traction provenant du drone captif (102, 200, 504) ou est configurée pour être déroulée automatiquement par la plate-forme.

2. Système de drone captif de la revendication 1, où l'attache (104, 219, 506) est configurée pour communiquer un liquide à partir du système de commande (231) jusqu'à un orifice de sortie s'étendant à partir du drone captif (102, 200, 504).

3. Système de drone captif de la revendication 1, comprenant en outre :
une ou plusieurs caméras (216) intégrées au drone captif (102, 200, 504).

4. Système de drone captif de la revendication 1, comprenant en outre :
une pluralité d'hélices qui fournissent l'élévation et l'accélération au drone captif (102, 200, 504).

5. Système de drone captif de la revendication 1, où le système de commande (231) est un camion utilitaire.

6. Système de drone captif de la revendication 1, où l'interface d'utilisateur (214) inclut des commandes pour l'altitude et des commandes directionnelles.

7. Système de drone captif de la revendication 1, où le système de commande (100, 500) inclut une aire d'atterrissage pour faire atterrir le drone captif (102, 200, 504).

8. Système de drone captif de la revendication 1, où le système de commande (231) inclut en outre un générateur pour alimenter le drone captif (102, 200, 504) et une pompe pour pomper un fluide vers le haut à travers l'attache (104, 219, 506).

9. Système de drone captif de la revendication 1, où le drone captif (102, 200, 504) inclut une batterie de secours dans le cas où l'attache (104, 219, 506) a une défaillance.

10. Système de drone captif de la revendication 1, où le système de drone captif (100, 500) inclut un véhicule de commande (106) qui inclut un berceau pour lancer et stocker le drone captif (102, 200, 504).

11. Système de drone captif de la revendication 1, où l'attache (104, 219, 506) est formée au moins en partie de graphène.

12. Système de drone captif de la revendication 1, où le drone captif (102, 200, 504) est configuré de manière autonome pour être commandé en utilisant les signaux de commande envoyés à partir du système de commande, où le système de commande est un véhicule de commande (106).

13. Système de drone captif selon la revendication 1, où le drone captif inclut au moins un premier drone captif agencé de façon à porter le poids de l'attache et au moins un deuxième drone captif connecté en série avec l'au moins premier drone captif.

14. Système de drone captif selon la revendication 1, où le drone captif (102, 200, 504) est un premier drone captif et inclut un réceptacle pour stocker un fluide, où l'attache (104, 219, 506) inclut un conducteur configuré pour communiquer le fluide ; et où le système de drone captif (100, 500) inclut un deuxième drone captif connecté au premier drone captif par une attache, le deuxième drone captif est configuré pour délivrer le fluide à travers un ou plusieurs ajutages en vue d'une pulvérisation ; et le système de commande (231) est configuré pour commander le premier drone captif (102, 200, 504) et le deuxième drone captif.

15. Procédé permettant d'utiliser un système de drone captif, ledit système de drone captif comprenant :
un drone captif (102, 200, 504) incluant une attache (104, 219, 506), où l'attache (104, 219, 506) inclut un conducteur configuré pour communiquer au moins des signaux de puissance et de commande ;
une plate-forme, et un système de commande (231) configuré pour commander le drone captif (102, 200, 504), le système de commande (231) étant configuré pour fournir de la puissance pour le drone captif (102, 200, 504), et le système de commande (231) incluant une interface d'utilisateur (214) pour commander les signaux de commande ;
ledit procédé comprenant les étapes consistant à :
activer des commandes pour le drone captif (102, 200, 504) ;
lancer le drone captif à partir du système de commande (231) ; et
commander le drone captif (102, 200, 504) à partir de l'interface d'utilisateur (214) du système de commande (231) en utilisant l'attache (104, 219, 506) entre le système de commande (231) et le drone captif (102, 200, 504), les signaux de commande incluant un signal crypté, virtuel ou propriétaire utilisé par l'attache (104, 219, 506) entre le drone captif (102, 200, 504) et le système de commande (231) pour empêcher un accès indésirable au drone captif (102, 200, 504) ; **caractérisé en ce que** l'attache (104, 219, 506) est configurée pour employer un système d'amarrage automatisé pour ajouter l'attache (104, 219, 506) au drone en utilisant une interface d'attache ; et où le système de drone captif est configuré pour étendre le drone captif à partir de la plate-forme, où le drone captif est configuré pour être piloté ou propulsé à partir de la plate-forme jusqu'à une position, une localisation, un objet, une structure, ou des coordonnées applicable/s, où l'attache (104, 219, 506) est configurée pour être libérée sur la base d'une force de traction provenant du drone captif (102, 200, 504) ou est configurée pour être déroulée automatiquement par la plate-forme.

16. Procédé de la revendication 15, comprenant en outre :
le fait de communiquer un liquide à travers l'attache (104, 219, 506).

17. Procédé de la revendication 16, où le liquide est délivré en sortie par le drone captif (102, 200, 504).

18. Procédé de la revendication 15, comprenant en outre :
le fait de capturer une vidéo à partir du drone captif (102, 200, 504) et du système de commande (231).

19. Procédé de la revendication 15, où le drone captif (102, 200, 504) est configuré pour fonctionner de manière autonome sur la base d'une logique (212).
